# EUROPÄISCHE PATENTANMELDUNG

(11) **EP 1 320 032 A1**
(43) Veröffentlichungstag der Anmeldung: **18.06.2003**
(21) Anmeldenummer: 01129649.8
(22) Anmeldetag: 12.12.2001
(51) Int. Cl.: G06F 9/46

(54) **Verfahren zum Ändern des Betriebszustandes eines Anwendungsprogramms**

(71) Anmelder: SIEMENS AKTIENGESELLSCHAFT, 80333 München (DE)
(72) Erfinder: Pasteanu, Calinel, 82269 Walleshausen (DE)

(57) **Zusammenfassung**

Die Erfindung betrifft ein Verfahren, bei dem eine Zwischenanforderung (40) an ein Hilfsprogramm gerichtet wird. Die Zwischenanforderung (40) betrifft eine Änderung des Betriebszustandes eines Anwendungsprogramms (AP1). Das Hilfsprogramm (HP1) erzeugt aufgrund der Zwischenanforderung (40) einen betriebssystemabhängigen Aufruf einer Programmfunktion des Betriebssystems (BS1). Dadurch entsteht ein weitgehend vom Betriebssystem (BS1, BS2) unabhängiges Verfahren.

## Beschreibung

Die Erfindung betrifft ein Verfahren, bei dem in einer Speichereinheit einer Datenverarbeitungsanlage ein Betriebssystemprogramm gespeichert wird. Das Betriebssystemprogramm verwaltet Anwendungsprogramme, für die es aus Sicht des Betriebssystemprogramms verschiedene Betriebszustände gibt.

Unter einem Betriebssystem wird allgemein das Bindeglied zwischen einem Anwendungsprogramm und den elektronischen Bauelementen der Datenverarbeitungsanlage angesehen. Das Betriebssystem ermöglicht die Ausführung von Anwendungsprogrammen. Das Betriebssystem übernimmt zentrale Aufgaben, wie die Steuerung der Ein- und Ausgabegeräte, die Steuerung der Speicherverwaltung und die Steuerung der Betriebszustände. Beispiele für Betriebssysteme sind das Betriebssystem WINDOWS oder das Betriebssystem SOLARIS.

Anwendungsprogramme, die auch als Applikation bezeichnet werden, dienen dagegen der Lösung eines speziellen Problems. So gibt es u.a. Schreibprogramme, Grafikprogramme und Spielprogramme.

Aus der Sicht des Betriebssystems gibt es verschiedene Betriebszustände für ein Anwendungsprogramm, z.B.:
- das Programm ist beim Betriebssystem registriert,
- das Programm befindet sich im Arbeitsspeicher,
- das Programm wurde unterbrochen und befindet sich beispielsweise in einer Warteschlange für unterbrochene Programme,
- das Programm wird momentan ausgeführt.

Bisher werden von einem Anwendungsprogramm direkt an das Betriebssystem Anforderungen gerichtet, mit denen der Betriebszustand des Programms geändert werden soll, beispielsweise beim Laden des Programms in den Arbeitsspeicher der Datenverarbeitungsanlage. Die Anforderungen müssen zum Erreichen des gleichen Ziels deshalb für verschiedene Betriebssysteme verschieden sein.

Es ist Aufgabe der Erfindung, zum Ändern des Betriebszustandes eines Anwendungsprogramms ein einfaches Verfahren anzugeben, das insbesondere auch generisch in dem Sinne ist, dass eine möglichst große Unabhängigkeit von speziellen Betriebssystemen erreicht wird. Außerdem sollen eine zugehörige Vorrichtung und zugehörige Programme angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass die Vorgänge beim Ändern des Betriebszustandes grundsätzlich für verschiedene Betriebssysteme vereinheitlicht werden können. Dazu ist es jedoch erforderlich, eine vom Betriebssystem unabhängige Schnittstelle zwischen Anwendungsprogramm und Betriebssystem festzulegen und einzufügen. Unabhängig vom Betriebssystem bedeutet insbesondere für verschiedene Betriebssysteme auf die gleiche Art und Weise festgelegt, bspw. durch namensgleich Funktionsaufrufe oder durch gleichnamige Nachrichten.

Beim erfindungsgemäßen Verfahren richtet deshalb ein mit dem Anwendungsprogramm verknüpftes Partnerhilfsprogramm eine Zwischenanforderung an ein Hilfsprogramm. Das Partnerhilfsprogramm ist beispielsweise eine Bibliotheksfunktion, die zum Anwendungsprogramm hinzugelinkt worden ist.

Beim erfindungsgemäßen Verfahren unterscheidet sich die Zwischenanforderung von einer Anforderung, die zum Ändern des Betriebszustandes an das Betriebssystemprogramm direkt zu richten wäre. Außerdem ruft das Hilfsprogramm beim erfindungsgemäßen Verfahren abhängig von der mit der Zwischenanforderung angeforderten Änderung des Betriebszustandes des Anwendungsprogramms eine Programmfunktion des Betriebssystems zum Ändern des Betriebszustandes des Anwendungsprogramms in der für das Betriebssystemprogramm festgelegten Form auf.

Durch das erfindungsgemäße Verfahren wird erreicht, dass das Anwendungsprogramm Änderungen seines Betriebszustandes veranlassen kann, ohne das Betriebssystem direkt ansprechen zu müssen. Die Zwischenanforderungen bzw. Ursprungsanforderungen an das Partnerhilfsprogramm lassen sich unabhängig vom Betriebssystem immer auf die gleiche Art und Weise stellen.

Bei einer Weiterbildung des erfindungsgemäßen Verfahrens wird mit der Zwischenanforderung das Laden des Anwendungsprogramms in einen Arbeitsspeicher der Datenverarbeitungsanlage angefordert. Das Laden oder der Hochlauf des Anwendungsprogramms ist unter anderem mit der Reservierung von zusätzlichem Arbeitsspeicher verbunden, der zusätzlich zu dem zur Speicherung des Anwendungsprogramms benötigten Arbeitsspeicher für die Ausführung des Anwendungsprogramms erforderlich ist, z.B. zum Speichern von Variablen. So gibt es für verschiedene Betriebssysteme unterschiedliche Befehle zum Reservieren von Arbeitsspeicher, beispielsweise die Befehle "memalloc" und "getmem". Die Zwischenanforderung lautet aber unabhängig vom Betriebssystem beispielsweise nur "start". Die Umsetzung in betriebssystemabhängige Befehle wird vom Hilfsprogramm ausgeführt.

Bei einer Ausgestaltung wird mit der Zwischenanforderung das Entfernen des Anwendungsprogramms aus dem Arbeitsspeicher der Datenverarbeitungsanlage angefordert, d.h. der sogenannte shutdown. Auch hier gibt es Befehle, die sich von Betriebssystem zu Betriebssystem unterscheiden. Beispielsweise lauten diese Befehle "systerm(15)" oder "kill(9)". Gleichzeitig wird zusätzlich benötigter Arbeitsspeicher wieder freigegeben, so dass er von anderen Anwendungsprogrammen benutzt werden kann.

Bei anderen Ausgestaltungen dient die Zwischenanforderung einer Unterbrechung der Ausführung des Anwendungsprogramms, einer Wiederaufnahme der Ausführung des Anwendungsprogramms nach einer Unterbrechung, einer Registrierung oder Abmeldung des Anwendungsprogramms beim Hilfsprogramm oder beim Betriebssystem oder einer Ausgabe aller registrierten Anwendungsprogramme.

Bei einer nächsten Weiterbildung enthält das Anwendungsprogramm Maschinenbefehle, die abhängig vom Prozessortyp eines Prozessors sind, der die Maschinenbefehle ausführt. Der Prozessor ist dabei eine Schaltungsanordnung, die u.a. eine Steuereinheit, ein Befehlsregister, ein Operandenregister und ein Rechenwerk enthält.

Bei einer weiteren Weiterbildung des erfindungsgemäßen Verfahrens ist das Hilfsprogramm ein sogenanntes Diensterbringungsprogramm, das auch als Server bezeichnet wird. Das Partnerhilfsprogramm ist ein Dienstanforderungsprogramm, d.h. ein sogenannter Client. Durch die Anwendung des sogenannten Client-Server-Prinzips lässt sich beispielsweise zwischen Hilfsprogramm und Partnerhilfsprogramm eine von einem speziellen Betriebssystem unabhängig arbeitende Schnittselle auf einfache Art realisieren.

Bei einer anderen Weiterbildung des erfindungsgemäßen Verfahrens wird die Zwischenanforderung dem Hilfsprogramm über eine Meldungsschnittstelle, als Nachricht oder als Funktionsaufruf übermittelt. Eine Meldungsschnittstelle lässt sich beispielsweise mit Hilfe eines Speicherbereiches realisieren, auf den sowohl das Anwendungsprogramm bzw. das Partnerhilfsprogramm und auch das Hilfsprogramm Zugriff haben. Eine Nachricht wird beispielsweise über die Meldungsschnittstelle oder über ein Datenübertragungsnetz zum Hilfsprogramm übertragen. Funktionsaufrufe sind von den verschiedenen Programmiersprachen, z.B. der Programmiersprache C her, bzw. auch von den Betriebssystemen her bekannt.

Bei einer Weiterbildung wird das erfindungsgemäße Verfahren für das Ändern von Betriebszuständen mehrerer Anwendungsprogramme angewendet, die ein Partnerhilfsprogramm ansteuern. Beispielsweise ist das eine Anwendungsprogramm ein Spielprogramm und das andere Anwendungsprogramm ein Editorprogramm. Die Partnerhilfsprogramme sind in diesem Fall aus dem gleichen Quelltext erzeugt worden. Sind beide Partnerhilfsprogramme für den gleichen Prozessortyp bestimmt, so sind auch die Maschinenprogrammbefehle der Partnerhilfsprogramme identisch.

Bei einer anderen Weiterbildung werden zwei Hilfsprogramme eingesetzt, die als Schnittstelle zu voneinander verschiedenen Betriebssystemen arbeiten, z.B. zu den Betriebssystemen verschiedener Hersteller. Die Anwendungsprogramme erbringen die gleiche Funktion oder voneinander unterschiedliche Funktionen. Auch in diesem Fall lassen sich allgemeine Teile der Hilfsprogramme und Partnerhilfsprogramme einsetzen, die aus dem gleichen Quelltext erzeugt worden sind. Bei Betriebssystemen für den gleichen Prozessortyp sind auch die Maschinenprogramme der allgemeinen Teile und der Partnerhilfsprogramme gleich. Das Erstellen, Pflegen und Ändern von Anwendungsprogrammen und auch der Hilfsprogramme bzw. der Partnerhilfsprogramme wird so wesentlich einfacher als bisher, als für jedes Betriebssystem zum Ändern der Betriebszustände verschiedene Quelltexte erforderlich waren.

Bei einer anderen Weiterbildung ist die Datenverarbeitungsanlage Bestandteil eines sogenannten embedded-Systems, d.h. einer speziellen Schaltungseinheit, die für eine fest vorgegebene Anwendung entwickelt worden ist. Bei einer Ausgestaltung ist die Datenverarbeitungsanlage Bestandteil eines Endgerätes eines Mobilfunk-Datenübertragungsnetzes. Das Mobilfunknetz arbeitet beispielsweise gemäß GSM-Standard (Global System for Mobile Communication) oder nach einem anderen Standard für Mobilfunknetze. Insbesondere bei den eingebetteten-Systemen gibt es eine Vielzahl von Betriebssystemen, so dass sich das erfindungsgemäße Verfahren besonders wirkungsvoll einsetzen lässt.

Die Erfindung betrifft außerdem eine Vorrichtung zum Ändern des Betriebszustandes eines Anwendungsprogramms, welches zur Durchführung des erfindungsgemäßen Verfahrens bzw. seiner Weiterbildungen geeignet ist. Weiterhin sind das Partnerhilfsprogramm, das Hilfsprogramm und das Anwendungsprogramm geschützt. Für die Vorrichtung, das Partnerhilfsprogramm, das Hilfsprogramm und das Anwendungsprogramm gelten die oben genannten technischen Wirkungen ebenfalls.

Im Folgenden werden Ausführungsbeispiele der Erfindung an Hand der beiliegenden Zeichnungen erläutert. Darin zeigen:
- Figur 1: den sogenannten Lebenszyklus eines Programms in einer Datenverarbeitungsanlage,
- Figur 2: den Einsatz von Partnerhilfsprogrammen auf Datenverarbeitungsanlagen mit verschiedenen Betriebssystemen,
- Figur 3: den Aufbau eines weitestgehend vom Betriebssystem unabhängigen Partnerhilfsprogramms,
- Figur 4: den Aufbau eines betriebssystemabhängigen Hilfsprogramms, und
- Figur 5: Verfahrensschritte bis zur Ausführung eines Anwendungsprogramms.

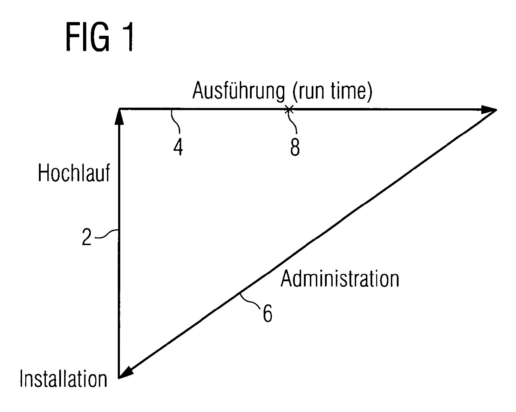

Figur 1 zeigt den sogenannten Lebenszyklus eines Anwendungsprogramms. Zunächst wird das Anwendungsprogramm installiert, wobei die Programmdaten des Anwendungsprogramms und zugehörige Datensätze in einem Festwertspeicher kopiert und dort gespeichert werden. Außerdem werden bei der Installation sogenannte Umgebungseinstellungen vorgenommen.

Vor der Ausführung des Anwendungsprogramms muss das Anwendungsprcgramm aus dem Festwertspeicher in den Arbeitsspeicher der Datenverarbeitungsanlage kopiert werden. Dieser Vorgang wird auch als Laden bezeichnet. Außerdem muss zusätzlicher Arbeitsspeicher für die Ausführung des Anwendungsprogramms bereit gestellt werden, z.B. zum Beispiel für die Speicherung von Variablen. Dieser Vorgang wird als Hochlauf bezeichnet, siehe Pfeil 2.

Nachdem das Anwendungsprogramm in den Arbeitsspeicher geladen worden ist, können seine Befehle durch einen Prozessor ausgeführt werden, siehe Pfeil 4. Die Ausführung eines Programms wird auch als "Run Time" bezeichnet.

Die Ausführung eines Anwendungsprogramms lässt sich vorübergehend unterbrechen und beispielsweise nach der Ausführung anderer Anwendungsprogramme wieder starten, siehe Unterbrechung 8. Es lassen sich auch Voreinstellungen ändern. Dieser Vorgang wird auch als Administration bezeichnet, siehe Pfeil 6.

Somit sind an Hand der Figur 1 insbesondere die Betriebszustände "installiertes Programm", "geladenes Programm", "ausgeführtes Programm" und "unterbrochenes Programm" unterscheidbar, wie sie auch vom Betriebssystems vermerkt werden.

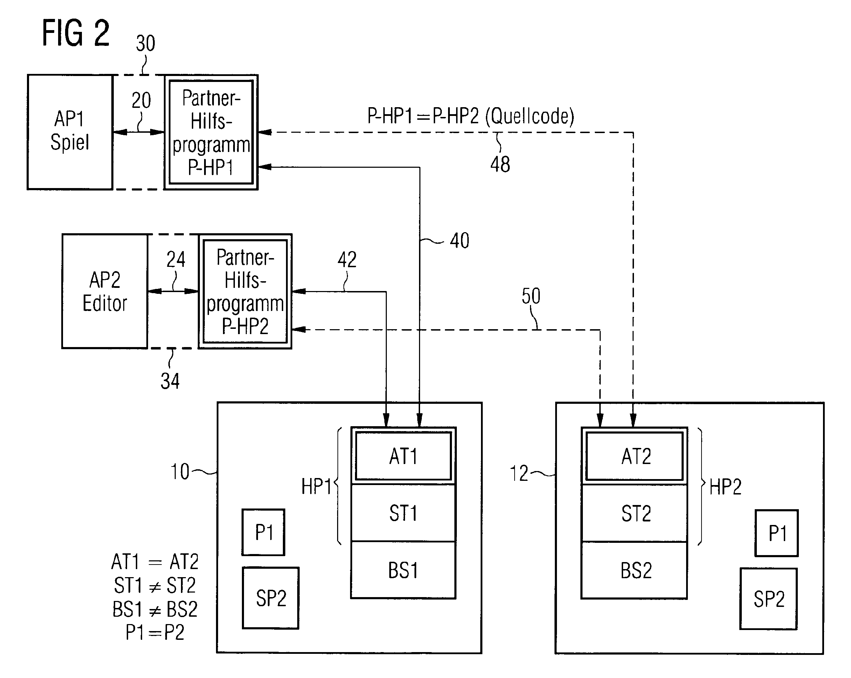

Figur 2 zeigt den Einsatz von zwei Partnerhilfsprogrammen P-HP1 und P-HP2 auf zwei Datenverarbeitungsanlagen 10 und 12. Die Datenverarbeitungsanlage 10 enthält einen Prozessor P1 und eine Speichereinheit SP1. In der Speichereinheit SP1 ist ein Betriebssystem BS1 gespeichert, beispielsweise das Betriebssystem WINDOWS NT. Außerdem enthält die Speichereinheit SP1 ein Hilfsprogramm HP1, das ein Hilfsprogramm für die Partnerhilfsprogramme P-HP1 und P-HP2 ist.

Die Datenverarbeitungsanlage 12 enthält ebenfalls einen Prozessor P2 und eine Speichereinheit SP2. Der Prozessor P2 hat den gleichen Prozessortyp wie der Prozessor P1. In der Speichereinheit SP2 ist ein Betriebssystem BS2 gespeichert, das sich vom Betriebssystem BS1 unterscheidet. Beispielsweise ist das Betriebssystem BS2 das Betriebssystem UNIX. In der Speichereinheit SP2 ist außerdem ein Hilfsprogramm HP2 gespeichert, das bezogen auf das Betriebssystem BS2 die gleichen Funktionen wie das Hilfsprogramm HP1 bezogen auf das Betriebssystem BS1 hat.

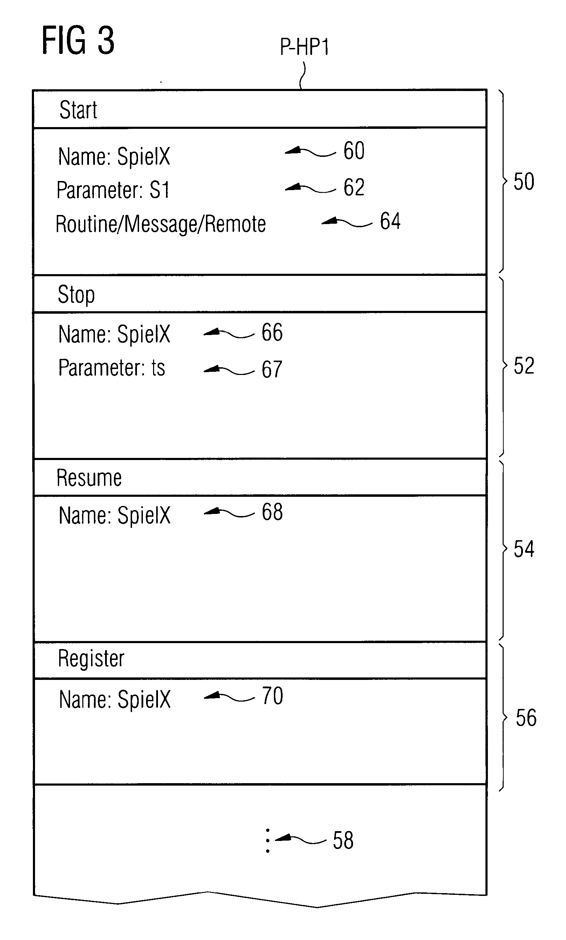

Das Partnerhilfsprogramm P-HP1 ist einem Anwendungsprogramm AP1 zugeordnet, das beispielsweise ein Spielprogramm ist. Das Partnerhilfsprogramm P-HP1 und das Hilfsprogramm HP1 dienen zum Weiterleiten von Ursprungsanforderungen 20, die vom Anwendungsprogramm AP1 kommen, an das Betriebssystem BS1. Die Anforderungen dienen der Änderung von Betriebszuständen des Anwendungsprogramms AP1. Der Aufbau des Partnerhilfsprogramms P-HP1 wird unten an Hand der Figur 3 näher erläutert. Das Partnerhilfsprogramm P-HP1 erzeugt Zwischenanforderungen 40, die unabhängig von einem Betriebssystem BS1 bzw. BS2 sind. Die Zwischenanforderungen 40 sind an das Hilfsprogramm HP1 gerichtet.

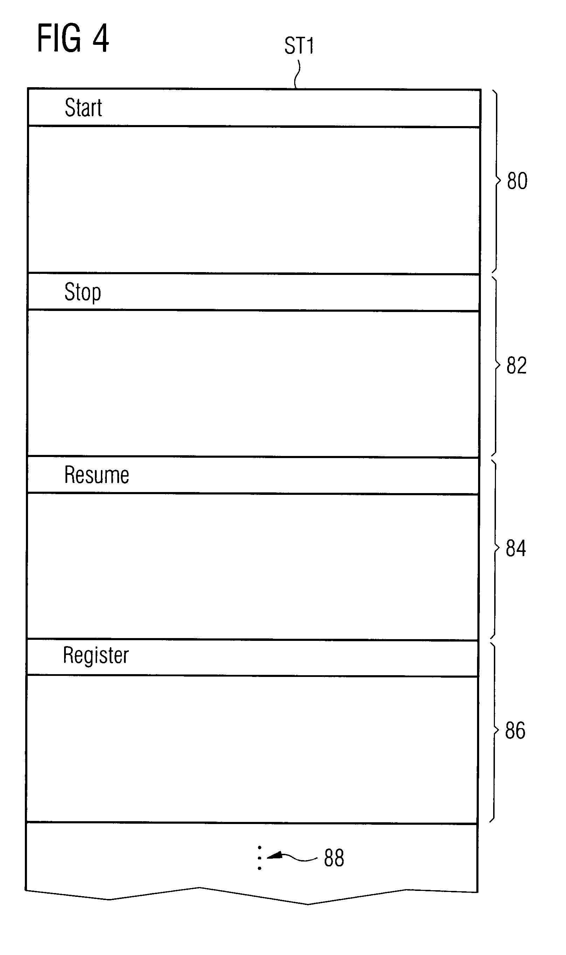

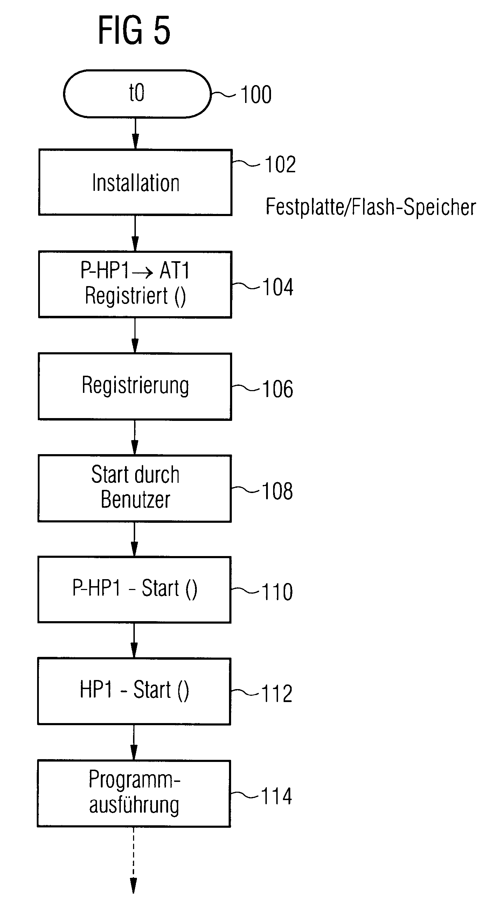

Das Hilfsprogramm HP1 enthält einen allgemeinen Teil AT1, der die unabhängig vom Betriebssystem festgelegte Schnittstelle umfasst. Ein spezieller Teil ST1 dient zur Umwandlung der unabhängig vom Betriebssystem festgelegten Zwischenanforderungen 40 in betriebssystemabhängige Funktionsaufrufe. Der Aufbau des speziellen Teils ST1 des Hilfsprogramms HP1 wird unten an Hand der Figur 4 näher erläutert. An Hand der Figur 5 werden unten die Verfahrensschritte erläutert, die vor dem Ausführen des Anwendungsprogramms AP1 bezüglich des Partnerhilfsprogramms P-HP1, des Hilfsprogramms HP1 und des Betriebssystems BS1 ausgeführt werden.

Ein Anwendungsprogramm AP2 erbringt die Funktionen eines Editors. Das Anwendungsprogramm AP2 richtet Ursprungsanforderungen 24 an das Partnerhilfsprogramm P-HP2. Die Ursprungsanforderungen 24 sind auf Änderungen des Betriebszustandes des Anwendungsprogramms AP2 gerichtet. Das Partnerhilfsprogramm P-HP2 erzeugt aufgrund der Ursprungsanforderungen 24 Zwischenanforderungen 42, die von einem Betriebssystem BS1 bzw. BS2 unabhängig sind und an das Hilfsprogramm HP1 gesendet werden.

Auf der Quellcodeebene und auf der Maschinencodeebene sind die Partnerhilfsprogramme P-HP1 und P-HP2 gleich. Auch die allgemeinen Teile AT1 und AT2 sind auf der Quellcodeebene und auf der Maschinencodeebene gleich. Die speziellen Teile ST1 und ST2 unterscheiden sich dagegen bereits im Quelltext, weil Besonderheiten der Betriebssysteme BS1 bzw. BS2 zu berücksichtigen sind.

Im Ausführungsbeispiel sind die Anwendungsprogramme AP1 und AP2 mit dem jeweils zugehörigen Partnerhilfsprogramm P-HP1 bzw. P-HP2 in einen Linkprozess verbunden worden, siehe gestrichelte Linien 30 und 34.

Programme bzw. Programmteile die bezüglich der Änderung von Betriebszuständen der Anwendungsprogramme AP1 und AP2 unabhängig von einem speziellen Betriebssystem BS1 bzw. BS2 festgelegt worden sind und die unverändert unter beiden Betriebssystemen ausgeführt werden können, werden auch als generisch bezeichnet. In Figur 2 sind die allgemeinen Teile AT1 und AT2 der Hilfsprogramme HP1 bzw. HP2 sowie die Partnerhilfsprogramme P-HP1 und P-HP2 generisch, siehe doppelte Umrahmungen in Figur 2.

Figur 3 zeigt den Aufbau des Partnerhilfsprogramms P-HP1. Das Partnerhilfsprogramm P-HP1 enthält Programmfunktionen 50 bis 58, die verschiedenen Betriebszuständen des Anwendungsprogramms bzw. bestimmten Änderungen von Betriebszuständen zugeordnet sind. Die Programmfunktion 50 dient der Anforderung von zusätzlichen Arbeitsspeicher, d.h. dem sogenannten Hochlauf. Der Programmfunktion 50 werden zwei Parameter 60 und 62 übergeben. Der Parameter 60 gibt den Namen des Spiels an, beispielsweise den Namen "SpielX". Der Wert des Parameters 62 gibt beispielsweise den vom Spiel benötigten zusätzlichen Speicherplatz in Megabyte an. Außerdem enthält die Programmfunktion 50 Programmbefehle 64, welche die Funktionen eines Kommunikationsmechanismus zum allgemeinen Teil AT1 des Hilfsprogramm HP1 erbringen und mit deren Hilfe sich eine der Programmfunktion 50 entsprechende Programmfunktion des allgemeinen Teil AT1 des Hilfsprogramms HP1 aufrufen lässt. "Entsprechend" bedeutet, dass auch diese Programmfunktion zum Hochlauf des Anwendungsprogramms AP1 dient.

Die Programmfunktionen 52 und 56 dienen in dieser Reihenfolge dem Stopp der Ausführung des Anwendungsprogramms AP1, der Wiederaufnahme der Ausführung des Anwendungsprogramms AP1 nach einem Stopp und der Registrierung des Anwendungsprogramms AP1 beim Betriebssystem BS1. Die Programmfunktionen 52 bis 56 enthalten ebenfalls Konstanten 66, 68, 70, in denen der Name des Spiels angegeben ist, z.B. der Name "SpielX". Der Name des Spiels wird beispielsweise für die Prüfung einer Berechtigung verwendet, mit deren Hilfe geprüft wird, ob das Partnerhilfsprogramms P-HP1 zur Änderung von Betriebszuständen berechtigt ist. Die Programmfunktion 52 nimmt beispielsweise einen optionalen Parameter 67 entgegen, dessen Wert die zu Zeitdauer angibt, für die die Ausführung eines Anwendungsprogramms unterbrochen werden soll. Durch drei Punkte sind weitere Programmfunktionen 58 angedeutet, beispielsweise ein sogenannter shutdown.

Auch die Programmfunktionen 52 bis 58 dienen der Kommunikation mit dem allgemeinen Teil AT1 des Hilfsprogramms HP1. Der allgemeine Teil AT1 des Hilfsprogramms HP1 enthält Programmfunktionen, die unabhängig von einem speziellen Betriebssystem festgelegt sind und die es ermöglichen, die von den Partnerhilfsprogrammen P-HP1 und P-HP2 kommenden Zwischenanforderungen 40 und 42 entgegen zu nehmen und an den speziellen Teil ST1 des Hilfsprogramms HP1 zu übergeben. Der allgemeine Teil AT1 ruft selbst keine Funktionen des Betriebssystems BS1 in der für das des Betriebssystems BS1 festgelegten Art und Weise auf.

Figur 4 zeigt den Aufbau des speziellen Teils ST1 des Hilfsprogramms HP1. Das Hilfsprogramm HP1 enthält Programmfunktionen 80 bis 88, die den Programmfunktionen 50 bis 58 entsprechen. Für jede Betriebszustandsänderung gibt es im Partnerhilfsprogramm P-HP1, im allgemeinen Teil AT1 des Hilfsprogramms HP1 und im speziellen Teils ST1 des Hilfsprogramm HP1 jeweils eine Programmfunktion. Beispielsweise betreffen die Programmfunktionen 80 bis 86 in dieser Reihenfolge das Laden des Anwendungsprogramms AP1, den Stopp des Anwendungsprogramms AP1, die Wiederaufnahme der Ausführung des Anwendungsprogramms AP1 nach einem Stopp und das Registrieren des Anwendungsprogramms AP1 beim Betriebssystem BS1. Die Programmfunktionen 80 bis 86 und auch die Programmfunktionen 88 greifen direkt auf Funktionen des Betriebssystems BS1 zu, d.h. sie erzeugen betriebssystemabhängige Aufrufe von Funktionen des Betriebssystems BS1.

Figur 5 zeigt Verfahrensschritte, die bis zur Ausführung des Anwendungsprogramms AP1 auszuführen sind. Das Verfahren beginnt in einem Verfahrensschritt 100 zu einem Zeitpunkt t0. In einem folgenden Verfahrensschritt 102 wird das Anwendungsprogramm AP1 gemeinsam mit dem Partnerhilfsprogramm P-HP1 auf einer Festplatte in der Speichereinheit SP1 gespeichert. Außerdem werden Umgebungseinstellungen vorgenommen.

In einem Verfahrensschritt 104 wird das Partnerhilfsprogramm P-HP1 vom Anwendungsprogramm AP1 veranlasst, die Registrierung beim Betriebssystem BS1 vorzunehmen. Dabei wird die Programmfunktion 56 aktiviert, die ihrerseits die Programmfunktion 86 aktiviert. In einem Verfahrensschritt 106 führt die Programmfunktion 86 die Registrierung beim Betriebssystem BS1 durch.

Es sei angenommen, dass das Anwendungsprogramm AP1 durch einen Benutzer gestartet wird. Beispielsweise wird ein Symbol für das Anwendungsprogramm AP1 mit Hilfe einer Eingabeeinheit ausgewählt. Die Auswahl wird über die Benutzeroberfläche dem Betriebssystem mitgeteilt. Das Betriebssystem BS1 lädt daraufhin das Anwendungsprogramm AP1 in den Arbeitsspeicher und beginnt die Ausführung des Anwendungsprogramms AP1 an der dafür vorgesehenen Stelle im Anwendungsprogramm AP1.

In einem Verfahrensschritt 110 wird eine Startroutine des Anwendungsprogramms AP1 aufgerufen, mit deren Hilfe zusätzlicher Arbeitsspeicher angefordert werden soll. Das Anwendungsprogramm AP1 richtet eine Ursprungsanforderung 20 an das Partnerhilfsprogramm P-HP1, wobei die Programmfunktion 50 ausgeführt wird. Die Programmfunktion 50 ruft ihrerseits die Programmfunktion 80 auf und übergibt den Namen des Spiels und den Parameter S1, in welchem die Größe des benötigten Speicherbereiches angegeben ist.

Durch die Programmfunktion 50 wird in einem Verfahrensschritt 112 die :Programmfunktion 80 des Hilfsprogramms HP1 aufgerufen. Die Programmfunktion 80 ruft ihrerseits eine Funktion des Betriebssystems BS1 auf, mit deren Hilfe zusätzlicher Speicher zur Verfügung gestellt wird. Beim Aufruf der Funktion des Betriebssystems BS1 wird auch der Parameter S1 übergeben, d.h. ein Wert für die Größe des angeforderten Speicherbereiches.

Anschließend wird die Ausführung des Anwendungsprogramms AP1 fortgesetzt, siehe Verfahrensschritt 114. Bei der Programmausführung des Anwendungsprogramms AP1 wird das Partnerhilfsprogramm P-HP1 noch mehrmals einbezogen, beispielsweise bei einem Stopp der Ausführung, bei einer Wiederaufnahme der Ausführung oder zum Beenden des Anwendungsprogramms, insbesondere zur Freigabe des zusätzlich benötigten Speicherbereiches.

Die Anwendungsprogramm AP1 und AP2 sowie die Partnerhilfsprogramme P-HP1 und P-HP2 lassen sich sowohl mit Hilfe des Betriebssystemprogramms BS1 als auch mit Hilfe des Betriebssystemprogramms BS2 ausführen. Demzufolge richtet das Partnerhilfsprogramm P-HP1 alternativ Zwischenanforderungen 48 an das Hilfsprogramm HP2. Das Partnerhilfsprogramm P-HP2 richtet alternativ Zwischenanforderungen 50 an das Hilfsprogramm HP2. Das Anwendungsprogramm AP1 ist beispielsweise unter der Verwendung von Laufzeitbibliotheken programmiert worden, die erst zur Laufzeit abhängig vom Betriebssystem BS1 bzw. BS2 eingebunden werden und Funktionen zur Eingabe und Ausgabe erbringen.

Bei einem anderen Ausführungsbeispiel sind die Prozessoren P1 und P2 unterschiedlicher Bauart. Deshalb sind mit zwei verschiedenen Compilern aus dem gleichen Quelltext die Partnerhilfsprogramme P-HP1 und P-HP2 sowie aus einem anderen Quelltext die allgemeinen Teile AT1 und AT2 zu erzeugen.

## Patentansprüche

1. Verfahren zum Ändern des Betriebszustandes eines Anwendungsprogramms (AP1),
bei dem in einer Speichereinheit (SP2) einer Datenverarbeitungsanlage (10) ein Betriebssystemprogramm (BS1) und ein Hilfsprogramm (HP1) gespeichert werden,
bei dem ein von einem Anwendungsprogramm (AP1) gesteuertes Partnerhilfsprogramm (P-HP1) eine Zwischenanforderung (40) an das Hilfsprogramm (HP1) richtet,
bei dem mit der Zwischenanforderung (40) für das Anwendungsprogramm (AP1) eine Änderung des Betriebszustandes angefordert wird,
bei dem sich die Zwischenanforderung (40) von einer Anforderung unterscheidet, die zum Ändern des Betriebszustandes an das Betriebssystemprogramm (BS1) zu richten wäre,
und bei dem das Hilfsprogramm (HP1) abhängig von der mit der Zwischenanforderung (40) angeforderten Änderung des Betriebszustandes des Anwendungsprogramms (AP1) eine Programmfunktion des Betriebssystemprogramms (BS1) zum Ändern des Betriebszustandes in der für das Betriebssystemprogramm (BS1) festgelegten Form aufruft.

2. Verfahren nach Anspruch 1, **dadurch gekennzeichnet, dass** die Betriebszustände allgemein Steuerzustände angeben, die ein Programm bei seiner Verwaltung durch ein Betriebssystem haben kann.

3. Verfahren nach Anspruch 1 oder 2, **dadurch gekennzeichnet, dass** mit der Zwischenanforderung (40) das Laden des Anwendungsprogramms (AP1) in einen Arbeitsspeicher (SP1) der Datenverarbeitungsanlage (10) angefordert wird,
und/oder dass mit der Zwischenanforderung (40) über den zur Speicherung des Anwendungsprogramms (AP1) erforderlichen Arbeitsspeicher hinaus zusätzlicher Arbeitsspeicher für die Ausführung des Anwendungsprogramms (AP1) angefordert wird,
oder dass mit der Zwischenanforderung (40) das Entfernen des Anwendungsprogramms (AP1) aus dem Arbeitsspeicher (SP1) der Datenverarbeitungsanlage (10) angefordert wird,
und/oder dass mit der Zwischenanforderung (40) das Freigeben des zusätzlichen Arbeitsspeichers angefordert wird, der für die Ausführung des Anwendungsprogramms (AP1) benötigt worden ist,
oder dass mit der Zwischenanforderung (40) eine Unterbrechung (8) der Ausführung des Anwendungsprogramms (AP1) angefordert wird,
oder dass mit der Zwischenanforderung (40) eine Wiederaufnahme der Ausführung des Anwendungsprogramms (AP1) nach einer Unterbrechung (8) angefordert wird,
oder dass mit der Zwischenanforderung (40) eine Registrierung des Anwendungsprogramms (AP1) beim Betriebssystemprogramm (BS1) oder beim Hilfsprogramm (HP1) angefordert wird,
oder dass mit der Zwischenanforderung (40) das Abmelden des Anwendungsprogramms (AP1, AP2) beim Betriebssystemprogramm (BS1) oder beim Hilfsprogramm (HP1) angefordert wird,
oder dass mit der Zwischenanforderung (40) eine Angabe aller registrierten Anwendungsprogramme (AP1, AP2) angefordert wird.

4. Verfahren nach einem der vorhergehenden Ansprüche, **dadurch gekennzeichnet, dass** das Anwendungsprogramm (AP1) Maschinenbefehle enthält, die prozessorabhängig sind.

5. Verfahren nach einem der vorhergehenden Ansprüche, **dadurch gekennzeichnet, dass** das Hilfsprogramm (HP1) ein Diensterbringungsprogramm und das Partnerhilfsprogramm (P-HP1) ein Dienstanforderungsprogramm enthalten.

6. Verfahren nach einem der vorhergehenden Ansprüche, **dadurch gekennzeichnet, dass** die Zwischenanforderung (4C) dem Hilfsprogramm (HP1) über eine Meldungsschnittstelle oder als Nachricht oder als Funktionsaufruf übermittelt wird,
und/oder dass die Zwischenanforderung (40) mit Hilfe eines Datenaustauschverfahrens übermittelt wird, das unabhängig von einem speziellen Betriebssystem (BS1, BS2) festgelegt worden ist.

7. Verfahren nach einem der vorhergehenden Ansprüche, **dadurch gekennzeichnet, dass** eine weitere Zwischenanforderung (42) von einem durch ein weiteres Anwendungsprogramm (AP2) gesteuertem weiteren Partnerhilfsprogramm (P-HP2) an das Hilfsprogramm (HP1) gerichtet wird,
dass beide Anwendungsprogramme (AP1, AP2) die Funktion voneinander verschiedener Anwendungen erbringen,
und dass beide Partnerhilfsprogramme (P-HP1, P-HP2) aus dem gleichen Quelltext erzeugt worden sind und/oder gleiche Maschinenprogramme haben.

8. Verfahren nach einem der vorhergehenden Ansprüche, **dadurch gekennzeichnet, dass** in einer Speichereinheit (SP2) einer weiteren Datenverarbeitungsanlage (12) ein weiteres Betriebssystemprogramm (BS2) und ein weiteres Hilfsprogramm (HP2) gespeichert werden,
wobei sich der Typ der Betriebssystemprogramme (BS1, BS2) voneinander unterscheidet,
ein durch ein nächstes Anwendungsprogramm gesteuertes nächstes Partnerhilfsprogramm (P-HP2) eine nächste Zwischenanforderung (44) an das weitere Hilfsprogramm (HP2) erzeugt,
und dass das zur Kommunikation mit dem Anwendungsprogramm (AP1, AF2) oder zur Kommunikation mit dem Partnerhilfsprogramm dienende allgemeine Teile (AT1, AT2) der Hilfsprogramme (HP1, HF2) und/oder die Partnerhilfsprogramme (P-HP1, P-HP2) aus dem gleichen Quelltext erzeugt worden sind und/oder die gleichen Maschinenprogramme haben.

9. Verfahren nach Anspruch 8, **dadurch gekennzeichnet, dass** das nächste Anwendungsprogramm, die gleiche Funktion wie das Anwendungsprogramm (AP1) oder das weitere Anwendungsprogramm (AP2) erbringt,
oder dass das nächste Anwendungsprogramm, eine andere Funktion als das Anwendungsprogramm (AP1) oder das weitere Anwendungsprogramm (AP2) erbringt.

10. Verfahren nach einem der vorhergehenden Ansprüche, **dadurch gekennzeichnet, dass** das Verfahren in einer Datenverarbeitungsanlage ausgeführt wird, die in eine Schaltung für eine spezielle Anwendung eingebettet ist
und/oder dass die Datenverarbeitungsanlage (10) Teil eines Endgerätes eines Mobilfunk-Datenübertragungsnetzes ist.

11. Verfahren nach einem der vorhergehenden Ansprüche, **dadurch gekennzeichnet, dass** die vom Partnerhilfsprogramm (P-HP1) ausgeführten Verfahrensschritte vom Betriebssystem (BS1, BS2) unabhängig sind.

12. Vorrichtung (10, 12) zum Ändern des Betriebszustandes eines Anwendungsprogramms (AP1), insbesondere Datenverarbeitungsanlage (10, 12),
mit einer Speichereinheit (SP1), in der ein Betriebssystemprogramm (BS1) gespeichert ist,
mit einer Hilfseinheit (HP1) zum Empfangen einer Zwischenanforderung (40), die von einem durch ein Anwendungsprogramm (AP1) gesteuertem Partnerhilfsprogramm (P-HP1) kommt,
wobei die Zwischenanforderung (40) für das Anwendungsprogramm (AP1) eine Änderung des Betriebszustandes anfordert,
wobei sich die Zwischenanforderung (40) von einer Anforderung unterscheidet, die zum Ändern des Betriebszustandes an das Betriebssystemprogramm (BS1) zu richten wäre,
und mit einer in der Hilfseinheit (HP1) enthaltenen Umwandlungseinheit (ST1), die abhängig von der mit der Zwischenanforderung (40) angeforderten Änderung des Betriebszustandes des Anwendungsprogramms (AP1) eine Programmfunktion des Betriebssystemprogramms (BS1) in der für das Betriebssystemprogramm (BS1) festgelegten Form aufruft.

13. Vorrichtung (10, 12) nach Anspruch 12, **dadurch gekennzeichnet, dass** die Vorrichtung (10, 12) weitere Einheiten enthält, die Verfahrensschritte nach einem der Ansprüche 1 bis 11 ausführen.

14. Partnerhilfsprogramm (P-HP1, P-HP2) zum Ändern des Betriebszustandes eines Anwendungsprogramms (AP1, AP2),
mit einer Befehlsfolge, bei deren Ausführung durch einen Prozessor (P1, P2) an ein Hilfsprogramm (HP1) eine Zwischenanforderung (40) gerichtet wird,
wobei mit der Zwischenanforderung (40) für ein das Partnerhilfsprogramm steuerndes Anwendungsprogramm (AP1) eine Änderung des Betriebszustandes angefordert wird,
und wobei sich die Zwischenanforderung (40) von einer Anforderung unterscheidet, die zum Ändern des Betriebszustandes an ein Betriebssystemprogramm (BS1) zu richten wäre.

15. Partnerhilfsprogramm (P-HP1, P-HP2) nach Anspruch 14 **dadurch gekennzeichnet, dass** bei seiner Ausführung die auf das Partnerhilfsprogramm (HP1, HP2) bezogenen Verfahrensschritte nach einem der Ansprüche 1 bis 11 ausgeführt werden.

16. Hilfsprogramm (HP1, HP2) zum Ändern des Betriebszustandes eines Anwendungsprogramms (AP1, AP2),
mit einer Befehlsfolge, bei deren Ausführung durch einen Prozessor (P1, P2) von einem durch ein Anwendungsprogramm (AP1) gesteuertem Partnerhilfsprogramm (P-HP1, P-HP2) eine Zwischenanforderung (40) empfangen wird,
wobei mit der Zwischenanforderung (40) für das Anwendungsprogramm (AP1) eine Änderung des Betriebszustandes angefordert wird,
wobei sich die Zwischenanforderung (40) von einer Anforderung unterscheidet, die zum Ändern des Betriebszustandes an ein Betriebssystemprogramm (BS1) zu richten wäre,
und wobei das Hilfsprogramm abhängig von der mit der Zwischenanforderung (40) angeforderten Änderung des Betriebszustandes des Anwendungsprogramms (AP1) eine Programmfunktion des Betriebssystemprogramms (BS1) zum Ändern des Betriebszustandes in der für das Betriebssystemprogramm (BS1) festgelegten Form aufruft.

17. Hilfsprogramm (HP1, HP2) nach Anspruch 16, **dadurch gekennzeichnet, dass** bei seiner Ausführung die auf das Hilfsprogramm (HP1, HP2) bezogenen Verfahrensschritte nach einem der Ansprüche 1 bis 11 ausgeführt werden.

18. Anwendungsprogramm (AP1, AP2) **dadurch gekennzeichnet, dass** es ein Partnerhilfsprogramm (P-HP1, P-HP2) nach Anspruch 14 oder 15 oder ein Hilfsprogramm (HP1, HP2) nach Anspruch 16 oder 17 steuert.
